# EUROPEAN PATENT SPECIFICATION

(11) **EP 3 331 152 B1**
(45) Date of publication and mention of the grant of the patent: **07.08.2024**
(21) Application number: 16830262.8
(22) Date of filing: 07.07.2016
(51) Int. Cl.: H02P 6/17

(54) **MOTOR CONTROL METHOD AND MOTOR CONTROL DEVICE**
MOTORSTEUERUNGSVERFAHREN UND MOTORSTEUERUNGSVORRICHTUNG
PROCÉDÉ DE COMMANDE DE MOTEUR ET DISPOSITIF DE COMMANDE DE MOTEUR

(30) Priority: 27.07.2015 JP 2015147711
(43) Date of publication of application: 06.06.2018
(73) Proprietor: Mitsuba Corporation, Kiryu-shi, Gunma 376-8555 (JP)
(72) Inventor: OHORI Ryo, Kiryu-shi Gunma 376-8555 (JP); SHIODA Naoki, Kiryu-shi Gunma 376-8555 (JP); SUGIYAMA Tomoyasu, Kiryu-shi Gunma 376-8555 (JP); HAYATA Masaki, Kiryu-shi Gunma 376-8555 (JP)
(74) Representative: Hoffmann Eitle
(86) International application number: PCT/JP2016/070181
(87) International publication number: WO 2017/018157

(56) References cited:
- JP-A- 2011 259 606
- JP-A- 2012 065 495
- JP-A- S61 277 394
- MICROSEMI: "Field Oriented Control of Permanent Magnet Synchronous Motors - User's Guide", 2012, pages 2 - 44, XP055564072, Retrieved from the Internet <URL:https://www.microsemi.com/document-portal/doc_view/130909-sf-foc-pmsm-hall-ug> [retrieved on 20190304]
- SAM-YOUNG KIM ET AL: "An Improved Rotor Position Estimation With Vector-Tracking Observer in PMSM Drives With Low-Resolution Hall-Effect Sensors", IEEE TRANSACTIONS ON INDUSTRIAL ELECTRONICS., vol. 58, no. 9, 10 December 2010 (2010-12-10), USA, pages 4078 - 4086, XP055564371, ISSN: 0278-0046, DOI: 10.1109/TIE.2010.2098367

## Description

### Technical Field

The present invention relates to a technique for controlling a brushless motor, and particularly to an operating sound reduction technique when the motor is being driven.

### Background Art

Among the known methods to drive the brushless motor are: a sinusoidal drive in which a stator coil voltage is changed into a sine wave; and a square-wave drive in which the voltage is changed into a square wave. Compared with the square-wave drive, the sinusoidal drive can keep the noise and vibration low when driving the brushless motor. In recent years, instead of the square-wave drive, the sinusoidal drive has been frequently adopted for motors that are required to be silent, such as vehicle-mounted motors.

For example, a brushless motor disclosed in JP 09-121583 A forms a current waveform of pseudo sine wave by appropriately switching ON/OFF modes of a bridge circuit, thereby reducing motor noise at low costs. In the case of a conventional control method for a brushless motor with Hall sensor, based on current rotation speed information, a rotation speed during a period up to the next sensor pulse switching timing is predicted; Based on that prediction, voltage is applied for each of finely-divided angles in order to supply a voltage of pseudo sine wave.

A method of estimating a rotor position is disclosed in: KIM, SAM-YOUNG et al, "An Improved Rotor Position Estimation with Vector-Tracking Observer in PMSM Drives with Low-Resolution Hall-Effect Sensors", IEEE Transactions on Industrial Electronics, vol. 58, no.9, published on December 10, 2010, pages 4078 to 4086, USA. This document discloses also the features of the preamble of claims 1 and 4. Moreover, a method of controlling a permanent magnet synchronous motor is disclosed in: Microsemi, "Field Oriented control of Permanent Magnet Synchonous Motors - User's guide", 2012. JP 2011 259606 teaches that a rotor of the motor is provided with a plurality of magnetic poles, a plurality of magnetic sensors outputting magnetic pole position detection signals according to a change of a magnetic pole position accompanying rotation of the rotor are arranged at opposite positions to the rotor, the magnetic pole position of the rotor is detected based on change and arrangement position of each magnetic pole position detection signal of the magnetic sensors, the sine wave-shaped modulation wave signal is generated based on the magnetic pole position, and sine wave driving of the motor is performed.

A further document is JP 2012 065495 A.

### Summary of the Invention

### Problems to be Solved by the Invention

However, in the case of the sinusoidal-drive brushless motor, in order to reduce its magnetic sound, there is a need to apply less-distorted sine-wave phase currents to the motor. In that regard, the motor of Cited Literature 1 has a pseudo sinusoidal drive, but the inductance and resistance values of current paths vary according to the mode. Accordingly, the values of currents may change when the modes are switched, which then could distort the waveforms of currents and cause the motor to vibrate and generate sound. According to the control method in which the rotation speed is predicted, a sudden change in the rotation speed could cause a difference between the predicted rotation speed and the actual rotation speed. If the difference between the predicted and actual speed is large when sensor pulses are switched, the phase current being applied to the motor may be distorted.

In order to carry out the sinusoidal drive with less distortion, vector control with the use of resolver, current sensor or the like is the most effective. However, the vector control requires expensive elements, such as high-performance microcomputers and resolvers. In this case, the problem is that the costs of motors increase.

In automobile power windows, sliding roofs and other goods that provide convenience, the motors used in many cases have a high rotation speed and a low rated current. In such motors, the phase current applied is low and the control frequency is high, making it difficult to drive with less-distorted sine waves. That is, in the case of current waveforms with small amplitudes and periods, it is geometrically difficult to make them ideal sine waves, and there is a limit on making the motors silent by adjusting the waveforms.

### Means for Solving the Problems

According to the present invention, a method as defined in claim 1 and a device as defined in claim 4 are provided. Preferred embodiments of the invention are defined in dependent claims 2, 3, 5 and 6.

### Brief Description of the Drawings

FIG. 1 is an explanatory diagram showing the configuration of a brushless motor according to one embodiment of the present invention.
FIG. 2 is a block diagram showing the configuration of a control system of the brushless motor of FIG. 1.
FIG. 3A is an explanatory diagram showing the waveform of voltage (pseudo-sine wave voltage) supplied to the brushless motor, and FIG. 3B is an explanatory diagram showing the relationship between a rotor rotation position (rotation angle) and an output signal from a position sensor.
FIG. 4 is a flowchart showing a processing procedure at a speed estimation processing unit.
FIG. 5 is a flowchart showing a control operation at a motor control device.
FIG. 6 is an explanatory diagram showing the relationship between an advance angle amount and a distortion rate of phase current.
FIG. 7 is an explanatory diagram showing the relationship between an advance angle and a motor magnetic sound.
FIG. 8 is a flowchart showing the procedure of a motor rotation speed control process at a speed instruction unit.
FIG. 9 is an explanatory diagram showing the waveform of current when speed control is off and when speed control is on.
FIG. 10 is an explanatory diagram showing a distortion rate of current when speed control is off and when speed control is on.
FIG. 11 is an explanatory diagram showing the relationship between a distortion rate of phase current and a motor magnetic sound.

### Embodiments for Carrying Out the Invention

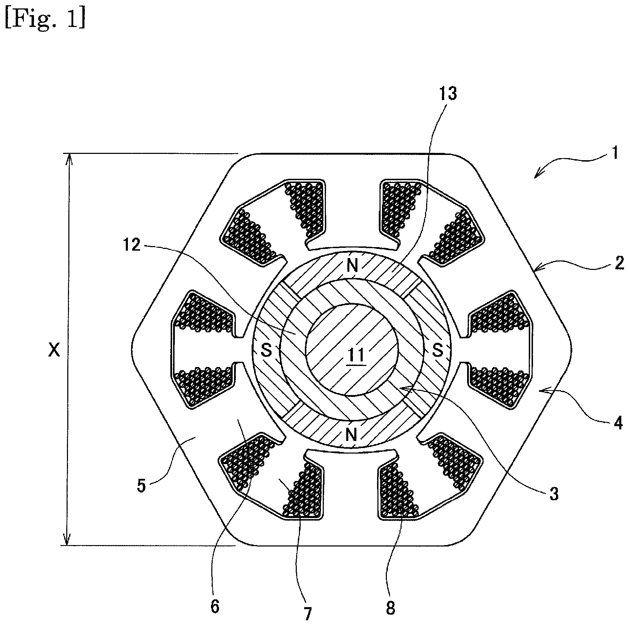

Hereinafter, an embodiment of the present invention will be detailed based on the accompanying drawings. The object of the embodiment described below is to lower the distortion rate of waveform of phase current being applied to a motor, without using expensive elements, and to provide low-noise brushless motors at low costs. FIG. 1 is an explanatory diagram showing the configuration of a brushless motor according to one embodiment of the present invention. A brushless motor 1 of FIG. 1 (referred to as motor 1) is of an inner rotor type, which is used in vehicle-mounted products that provide convenience. The motor 1 includes a stator 2 and a rotor 3, which is disposed inside the stator 2 in a rotatable manner. The stator 2 includes a stator core 4 that is made up of a large number of thin electromagnetic steel sheets that are stacked. The stator core 4 includes a yoke portion 5, whose outer shape is hexagonal, and salient poles 6, which radially protrude from the yoke portion 5 toward a radial-direction inner side (central direction) . The motor 1 has six salient poles 6 placed along the circumferential direction.

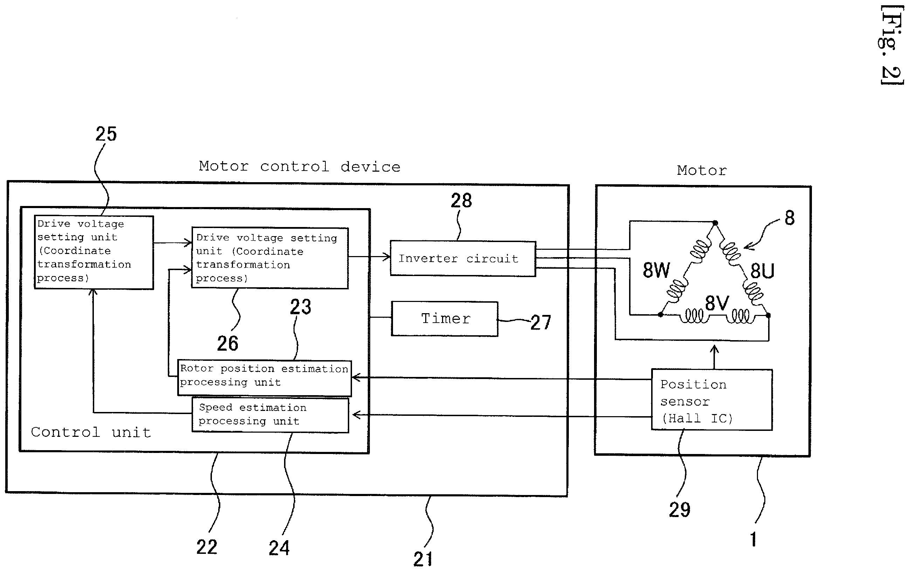

There are slots 7 between the adjacent salient poles 6. Around the outer periphery of the salient poles 6, a coils 8 is wound. The coil 8 is housed in the slots 7. The coil 8 is concentratedly wound. Three phase coils 8U, 8V and 8W are connected with delta connection (Refer to FIG. 2). The motor 1 has the hexagonal stator 2 and has therefore secured a wider winding space (slot cross-section area) as to the same width X, compared with a circular stator. Therefore, the motor 1 can have a higher output power or can be made smaller in size with a similar output power maintained, than a motor that employs an inscribed circle-shaped stator of width X.

The rotor 3 is inserted into the stator 2. The rotor 3 includes a shaft 11 and a rotor core 12, which is fixed onto the shaft 11. The rotor core 12, too, is made up of a large number of thin electromagnetic steel plates that are stacked. On the outer periphery of the rotor core 12, a magnet 13 made with rare earths are mounted. This means that the motor 1 is SPM motor (Surface Permanent Magnet Motor) . The magnet 13 is formed into a ring and has been magnetized in such a way that four N- and S-poles appear alternately along the circumferential direction. That is, the motor 1 is of a four-pole six-slot configuration. The magnet 13 has been skew-magnetized along the axis direction in order to reduce cogging torque and torque ripples.

FIG. 2 is a block diagram showing the configuration of a control system of the motor 1. As shown in FIG. 2, the motor 1 is driven by a motor control device 21. The motor control device 21 includes a control unit 22 that employs a microcomputer. The control unit 22 includes a rotor position estimation processing unit 23, a speed estimation processing unit 24, a speed instruction unit 25, a drive voltage setting unit 26 and a timer 27. The motor control device 21 supplies power to the motor 1's side via an inverter circuit 28. The motor 1 is PWM duty-controlled based on instructions from the speed instruction unit 25. The motor 1' s side includes position sensors 29 that uses Hall element (Hall IC). There are three position sensors 29 for U-, V-, and W-phases. The position sensors 29 detect a change in magnetic flux of the magnet 13 when the motor is operating, and detect the switching of magnetic poles of the magnet 13. The detection results are sent to the motor control device 21's side in the form of binary signal, High (H) or Low (L).

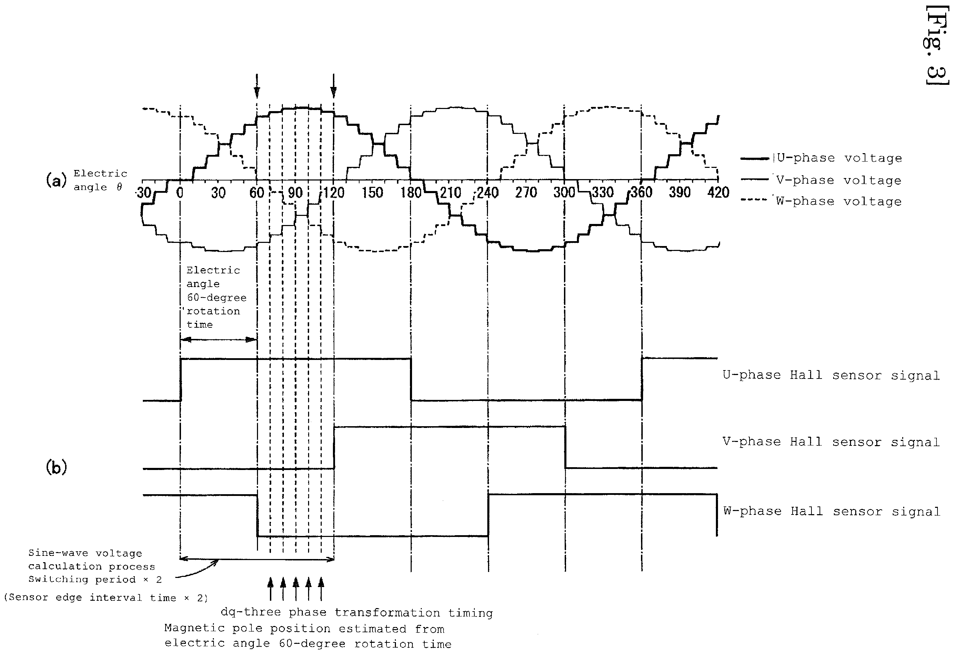

FIG. 3B is an explanatory diagram showing the relationship between a rotation position (rotation angle) of the rotor 3 and an output signal from the position sensor 29. As shown in FIG. 3B, as the rotor 3 rotates, the combination of output signals from each phase's position sensors 29 changes each time the electric angle changes by 60 degrees. For example, in the range of electric angle from 0 degrees to 60 degrees (referred to as "magnetic pole position = 0"), the combination of output signals from U-, V- and W-phase position sensors 29 is "H, L, H". In the range of electric angle from 60 degrees to 120 degrees (referred to as "magnetic pole position = 60"), the combination is "U, V, W : H, L, L". In the range of electric angle from 120 degrees to 180 degrees (referred to as "magnetic pole position = 120"), the combination is "U, V, W : H, H, L". In the range of electric angle from 180 degrees to 240 degrees (referred to as "magnetic pole position = 180"), the combination is "U, V, W : L, H, L". In the range of electric angle from 240 degrees to 300 degrees (referred to as "magnetic pole position = 240"), the combination is "U, V, W : L, H, H". In the range of electric angle from 300 degrees to 360 degrees (referred to as "magnetic pole position = 300"), the combination is "U, V, W : L, L, H".

After receiving the signals from the position sensors 29, the rotor position estimation processing unit 23 of the motor control device 21 detects the rotation position of the rotor 3, based on the combination of sensor signals from each phase's position sensor 29. As described above, there is a correlation between the combination of U-, V- and W-sensor signals (H or L) and the rotation position of the rotor 3. The rotor position estimation processing unit 23 estimates the current rotor rotation position based on the combination of signals: when the combination of sensor signals is "U, V, W : H, H, L", it assumes, for example, that the magnetic pole position = 120.

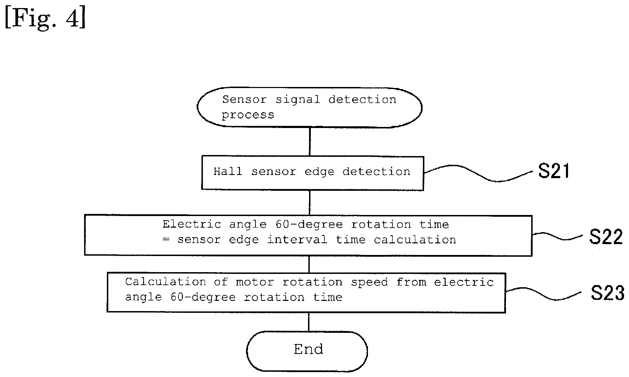

The speed estimation processing unit 24 calculates the rotation speed (revolving speed) of the rotor 3 from the switching time of signals H and L. As shown in FIG. 3B, in the motor 1, at the edge of a sensor signal, a change occurs in any of the phases each time the electric angle has changed by 60 degrees. The speed estimation processing unit 24 acquires, from signals of the position sensors 29, the edge switching time of sensor signals (Sensor edge interval time = Electric angle 60-degree rotation time), and calculates the rotation speed of the rotor 3. FIG. 4 is a flowchart showing a processing procedure at the speed estimation processing unit 24. As shown in FIG. 4, the speed estimation processing unit 24 detects the edge of a sensor signal (Step S21). Each time an interrupt occurs due to the edge detection, the sensor edge interval time is calculated (Step S22) . Incidentally, in step S22, in order to suppress variations of data, a moving average value may be calculated, with past detection values added.

After the sensor edge interval time is calculated in step S22, the process proceeds to step S23, where a motor rotation speed is calculated. In this case, the sensor edge interval time is a rotation time of 60-degree electric angle of the rotor 3, as described above. The motor 1 of the present embodiment has four poles (Number of pole pairs: two). Therefore, the rotation time of 60-degree electric angle corresponds to a rotation time of 30-degree mechanical angle. Based on this relationship, the speed estimation processing unit 24 calculates the rotation speed (motor rotation speed: rpm, rps) of the rotor 3 from the sensor edge interval time.

The speed instruction unit 25 compares the current speed of the rotor 3, calculated by the speed estimation processing unit 24, with a preset target speed for the motor 1, and then determines a duty-value that is used to drive the motor 1 at the target speed. A drive duty-value calculated by the speed instruction unit 25 is sent to the drive voltage setting unit 26. The drive voltage setting unit 26 calculates a PWM duty-value to be applied to the motor 1, based on a drive duty-value, which reflects a rotor rotation position detected by the rotor position estimation processing unit 23, as well as on a drive duty-value calculated by the speed instruction unit 25. The drive voltage setting unit 26 performs a coordinate transformation process (dq-three phase conversion) on the PWM duty-value before outputting it. In the motor 1, Vd is set at 0. The Vq that has been dq-three phase-converted turns out to be a duty-value that is to be actually applied to the motor 1. Then, based on the PWM duty-value that has been dq-three phase-converted at the drive voltage setting unit 26, a sine-wave voltage is supplied to the motor 1 via the inverter circuit 28. In this manner, the motor 1 is PWM duty-controlled based on the target speed by the sine-wave voltage, and is driven at a predetermined rotation speed.

The motor 1 is driven by the motor control device 21 in an open loop method (without current feedback) with sine-wave voltage. In this case, the sine-wave voltage is set by estimating a future rotor magnetic pole position, based on a motor rotation speed estimated from a sensor edge interval time (electrical angle 60-degree rotation elapse time), with a time interval calculated by equally dividing (into ten, for example) the sensor edge interval time. The motor rotation speed is adjusted by lowering a Duty-value from a no-load rotation speed, and a PWM duty-value is set in accordance with an estimated rotation position of the rotor 3. As shown in FIG. 3A, due to the duty-value (supply voltage) in each division time, the supply voltage becomes a gradual pseudo sine-wave voltage, and is applied to the motor 1, with a rotation time of 60-degree electric angle as a calculation process switching period. In this case, the duty-value of each division time is a predetermined value corresponding to a rotor rotation position (estimated). Accordingly, as described above, if a difference emerges between a rotation speed predicted based on the sensor edge interval time and an actual rotation speed, a phase current may be distorted at the time of sensor pulse switching.

Accordingly, in the control process related to the present invention, at processing intervals that are at least smaller than "Sensor edge interval time × 2", the motor rotation speed (duty-value) is speed-controlled (P1-controlled) based on the target rotation speed. In such a case, the processing intervals of the speed control should be made smaller to improve control accuracy, but it puts a greater burden on the control process. According to the present embodiment, the processing intervals of the speed control are made equal to or smaller than Sensor edge interval time × 2 (Edge interval measurement time + estimated drive time from measurement result = next edge interval measurement time), in order to at least eliminate the difference from the actual rotation speed at the time of sensor pulse switching. Meanwhile, even if the speed control intervals are made smaller in such a way that its number exceeds a division number (10 in the above case) of the sensor edge interval time for pseudo sine-wave drive, the results of the speed control process would not be reflected in the drive duty-value in an effective manner. Accordingly, in terms of balance related to a processing burden, it is preferred that the speed control intervals be equal to or greater than " (Sensor edge interval time × 2)/ Edge interval time division number".

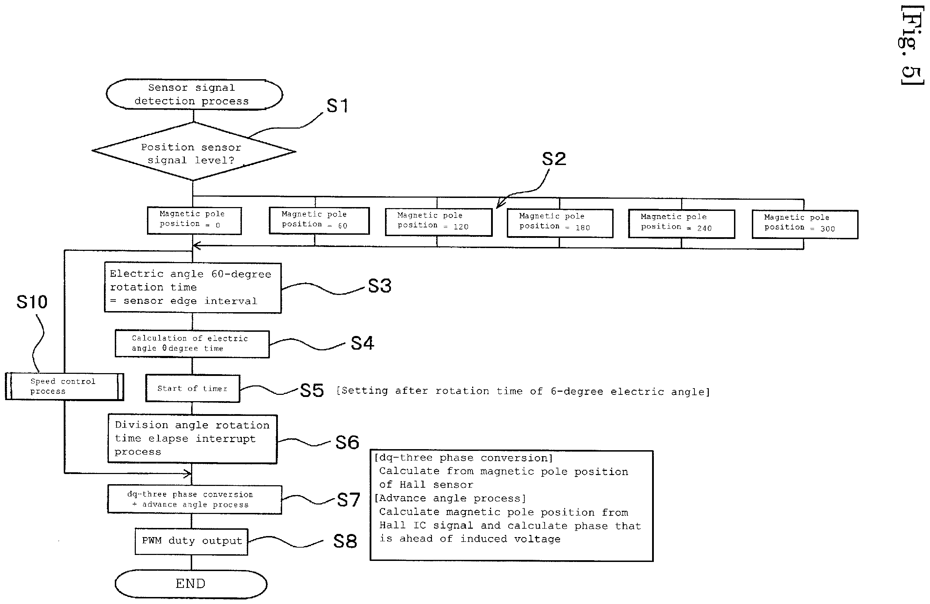

FIG. 5 is a flowchart showing a control operation of the motor control device 21. As shown in FIG. 5, the motor 1 carries out sine-wave voltage drive (Steps S1 to S7), as well as speed control based on the target rotation speed (Step S10). First, a sine-wave voltage drive process will be described. In the case of the sine-wave voltage drive, first, the signal level (H or L) of each phase position sensor 29 is detected (Step S1). Then, based on a combination of sensor signal levels, the rotor position estimation processing unit 23 determines the rotation position (magnetic pole position) of the rotor 3 (Step S2). As described above, the rotor position estimation processing unit 23 identifies the rotation position of the rotor 3 based on the combination of output signals "H or L" of U-, V- and W-phase position sensors 29: "Magnetic pole position = 60" for "U, V, W : H, L, L", for example.

After the rotor rotation position is determined, the process proceeds to step S3, where a sensor edge interval time is acquired. Since the motor 1 of the present embodiment is a three phase drive motor, the sensor edge interval time is equal to the rotation time of 60-degree electric angle and this becomes a calculation process switching period for sine-wave voltage. Incidentally, as for the sensor edge interval time, in order to reduce variations in data, a moving average value may be calculated with a previous detection value added. After the sensor edge interval time is acquired, the process proceeds to step S4, where time Tθ (division angle rotation time) that is required for rotation of electric angle θ (10 division: θ = 6 degrees, in this case) which is calculated by equally dividing a 60-degree electric angle by a predetermined value is calculated.

After the division angle rotation time T*θ* is calculated, the timer 27 is started in step S5 to count the division angle rotation time Tθ. After the start of the timer, based on a rotor estimation position after the division angle rotation time Tθ, a duty-value after the time Tθ has passed is set. That is, interrupt processing is carried out each time the division angle rotation time has passed (Step S6), and the time Tθ is regarded as a drive voltage switching timing, and, each time, a PWM duty-value corresponding to the rotor rotation position (the ratio of an H portion of a PWM specification signal to division angle rotation time Tθ) is calculated through dq-three phase conversion (Step S7) and is then output (Step S8).

In this case, in the motor 1, in order to increase a peak value of phase current, an advance angle process is conducted. That is, in order to advance the phase of phase current with respect to a motor induced voltage, a PWM duty-value that is a predetermined angle (fixed vale, which is 5 degrees for example) ahead with respect to the rotor rotation position is set, and dq-three phase conversion is performed. As described above, for a motor with a high rotation speed and a low rated current, phase currents being applied are low and control frequencies are high. This makes it difficult to drive with a less distorted sinusoidal waveform. Meanwhile, in the case of a motor with a sufficient rotation speed, if an advance angle is added, reactive currents, which do not contribute to torque, increase. Therefore, there is usually no need for advance angles. Particularly, in the case of SPM motor, the state of advance angle 0 turns out to be a maximum-efficiency current phase. Therefore, advance-angle control is usually not performed.

In the control process related to the present invention, an advance angle is daringly added to a high-rotation motor to lower a PWM Duty-value, thereby curbing the rotation speed, which is increased by advance angles. In this case, if the PWM Duty-value and a supply voltage value are lowered, a current value increases in a motor with the same output power (workload) (if W is constant when W = I·V, I rises as V is decreased) . As a result, the phase current being applied to the motor increases. If the phase current increases at the same rotation speed, an electromotive force (counter electromotive force) by self-induction of the motor rises.

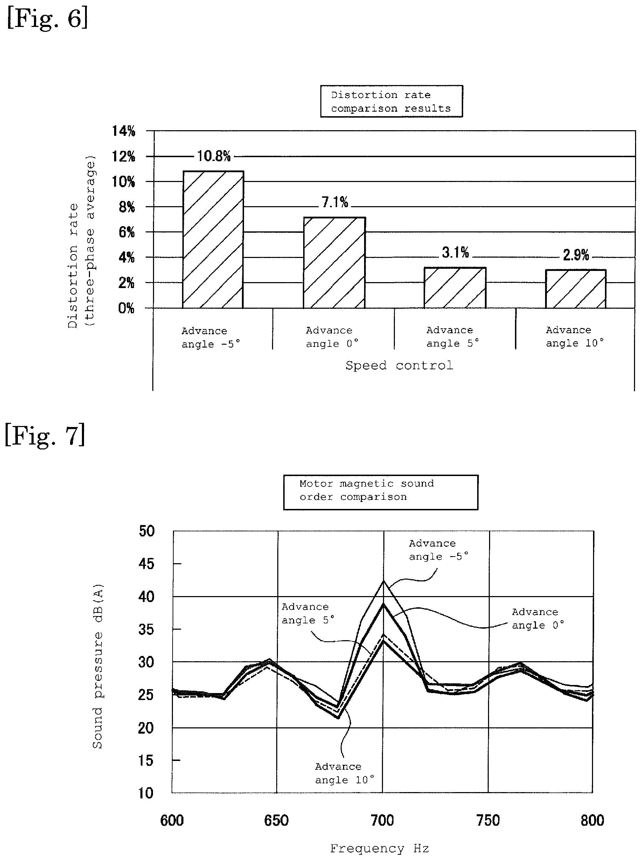

That is, in the case where electromotive force V = -L . (ΔI/Δt), if ΔI rises, Δt is constant since it is a control cycle. Inductance L, too, is a constant value unique to the motor, and electromotive force V therefore becomes larger. If electromotive force V increases, a rapid change of current relative to a change of supply voltage can be mitigated, and it looks as if it becomes slow in reaction to a change in voltage, and therefore the distortion of phase current waveform is kept low. FIG. 6 is an explanatory diagram showing the relationship between an advance angle amount and a distortion rate of phase current. As shown in FIG. 6, the distortion rate of current is lower when an advance angle is added. In the motor 1, in step S6, the PWM duty-value is set in such a way that the phase of current is always ahead of induced voltage. FIG. 7 is an explanatory diagram showing the relationship between an advance angle and a motor magnetic sound. It is obvious from FIG. 7 that, as the advance angle value increases, the peak of motor magnetic sound decreases. Incidentally, the motor 1 is able to rotate in both the forward and reverse directions and advance angles can be added in both the forward and reverse directions.

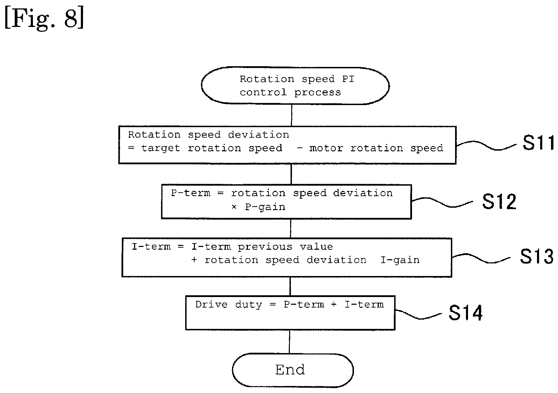

Meanwhile, the speed instruction unit 25 carries out a speed control process (Step S10) in order to maintain a predetermined speed of the motor 1. FIG. 8 is a flowchart showing the procedure of a motor rotation speed control process (PI-control process) at the speed instruction unit 25. As shown in FIG. 8, the speed instruction unit 25 first uses a current motor rotation speed calculated by the speed estimation processing unit 24 to calculate a difference (rotation-speed deviation) between the motor 1's target rotation speed and the current motor rotation speed (Step S11). Then, based on the rotation-speed deviation and P-gain, P-term of PI control is calculated (Step S12) . Moreover, based on the previously calculated value of I-term, the rotation-speed deviation and I-gain, I-term of PI control is calculated (Step S13) . Based on the calculated P-term and I-term, a drive duty-value that is used to control and drive the motor 1 at a predetermined speed is calculated (Step S14) . As the speed control process is carried out (step S10), the duty-value set in step S6 is corrected by the duty-value calculated in step S10 (step S14) and dq-three phase conversion is performed in step S7.

In the motor 1, the speed control process is performed at intervals that are equal to or smaller than α (Speed control period β ≤ α), when α is: "Calculation process switching period of sine-wave voltage × 2 (= Sensor edge period time × 2)". In this case, α is expressed as follows: (1/Motor rotation speed[rps])÷(360 degree×Number of pole pairs/Sensor edge angle×2) = α α is a value unique to motor specifications. Incidentally, as described above, it is preferred that the processing intervals of speed control be smaller. However, a control process burden is taken into account in this case, and the intervals are set greater than or equal to division angle rotation time Tθ.

In the above equation, (1/Motor rotation speed [rps]) is the time (seconds) that is required for the motor to rotate once. Moreover, (360 degrees × Number of pole pairs) is an electric angle for one rotation of the motor. Accordingly, (1/Motor rotation speed [rps]) ÷ (360 degrees × Number of pole pairs) is a motor rotation time for one-degree electric angle. In this case, α is set by multiplying this by "Sensor edge angle × 2". In this example, the sensor edge angle is 60-degree electric angle. Therefore, period β of the speed control process is set less than or equal to the motor rotation time for 120-degree electric angle. For example, in the case of a motor with "3500 rpm·Four poles. Sensor edge angle 60 degrees (electric angle)", α = 2.9 ms because: 3500 rpm = 58.33 rps; Number of pole pairs is 2. The specifications of the motor 1 is set in such a way that speed control period β is equal to or less than this value (e.g., 2 ms).

As described, in the motor 1, sine-wave voltage driving is carried out by predicting a rotor position between the next sensor edges (Electric angle 60 degrees) in an elapse time between sensor edges (Electric angle 60 degrees). Moreover, at least before predicted driving is switched to the next data, or before 60 degrees of data collection and 60 degrees of control based on it come to an end, speed control is performed in order to correct a difference between the target rotation speed and the actual rotation speed. As a result, in the motor 1, smooth control continues even at the time of sensor pulse switching. As shown in FIG. 3A, the motor 1 is driven by a pseudo sine-wave voltage.

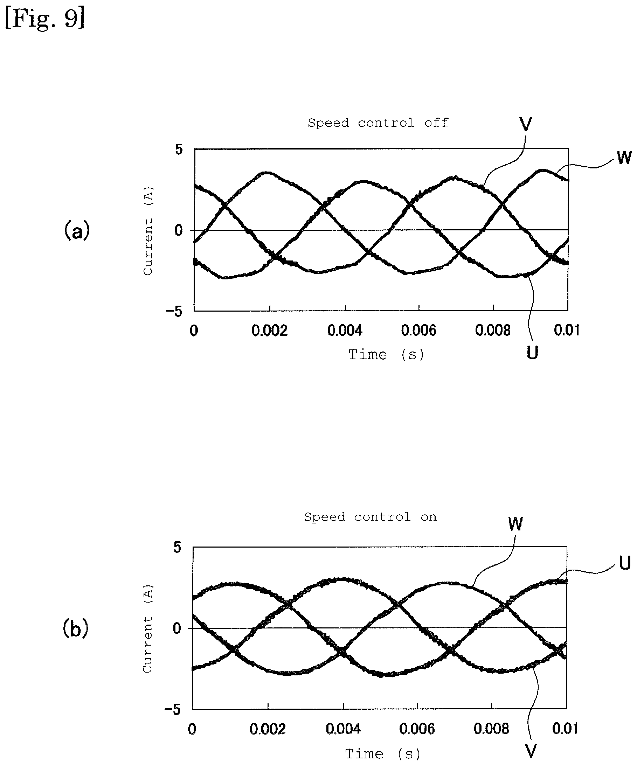

As the speed control process is performed, the duty-value set in step S6 is corrected. As a result, in the motor 1, even if a rapid change takes place in the rotation speed due to disturbance, the predicted rotation speed is corrected, and the duty-value is corrected to match the actual rotation speed. Accordingly, at the time of sensor pulse switching, a difference is more unlikely to occur between the predicted value and the actual value, and distortion of phase current being applied to the motor can be curbed. Therefore, it is possible to reduce the motor's operating sound. FIG. 9 is an explanatory diagram showing the waveform of current when speed control is off and when speed control is on. According to experiments by the inventors, as shown in FIG. 9, a sine-wave phase current with evidently less distortion is obtained when speed control is on.

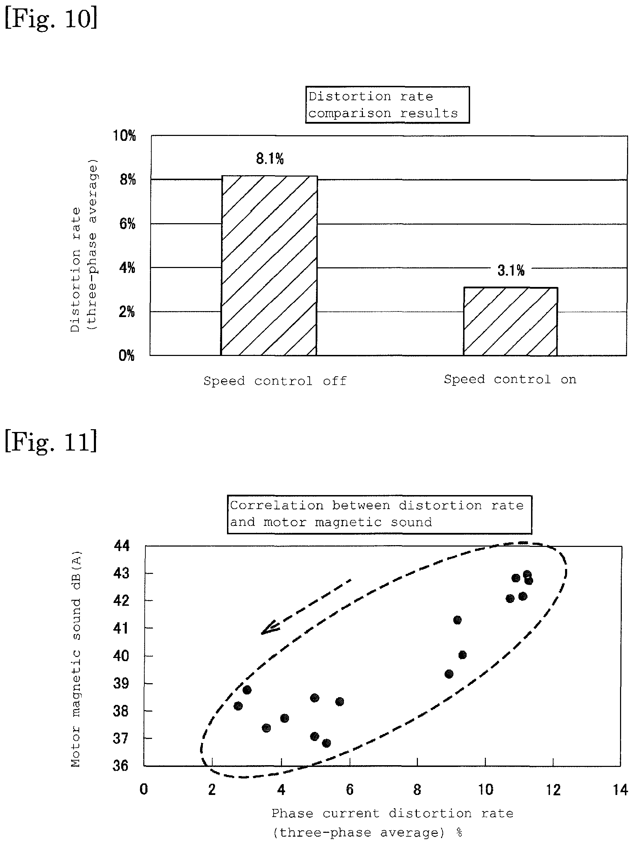

FIG. 10 is an explanatory diagram showing a distortion rate of current when speed control of FIG. 9 is off and when that speed control is on. Incidentally, the distortion rate represents a content ratio of harmonic components, other than fundamental waves (sine waves) contained in the measured waveform. As shown in FIG. 10, in the motor 1, it is clear that the distortion rate of phase current is lower when speed control is on. The reason is that the addition of speed control makes it possible to more accurately maintain a constant rotation speed relative to a change in load. Therefore, a margin of error in recognizing the position of a magnetic pole can be made small, and it is assumed that the switching of output voltage can be kept small at the time of sensor pulse switching.

Moreover, a lower distortion rate means a reduction in motor magnetic sound. FIG. 11 is an explanatory diagram showing the relationship between a distortion rate of phase current and a motor magnetic sound. From FIG. 11, it is clear that both have a strong correlation. Accordingly, if the distortion rate of phase current is lowered due to the implementation of speed control, the motor magnetic sound is also reduced. In this manner, like the present invention, by using the combination of "Voltage sine wave + speed control + advance angle", the distortion rate of phase-current waveform applied to the motor can be lowered. As a result, without using expensive elements such as high-performance microcomputer, resolvers and current sensors, a low-noise brushless motor can be offered at low cost.

The present invention is not limited to the above embodiment, and may be changed in various forms without departing from the spirit thereof.

For example, in the above embodiment, the control process of the present invention is applied to a three-phase SPM motor. The present invention can also be applied to motors other than three-phase ones, such as five-phase motors. In such a case, the sensor edge interval time is a different value than in the above example. The present invention can be applied to an IPM motor as well. Furthermore, the advance angle value can be set using a map corresponding to the rotation speed or the like, instead of adding a fixed value. Furthermore, the present invention can be applied not only to a brushless motor of 4-pole, 6-slot (4P6S) configuration, but also to a brushless motor of 2P3SXn (n: integer number).

### Industrial Applicability

The brushless motor control method and control device of the present invention can be applied not only to convenience goods such as power windows and sunroofs, but also to home appliances such as vacuum cleaners and washing machines, industrial equipment including air conditioners, and other electrical equipment having motors as drive sources.

### Explanation of Reference Symbols

- 1:: Brushless motor
- 2:: Stator
- 3:: Rotor
- 4:: Stator core
- 5:: Yoke portion
- 6:: Salient pole
- 7:: Slot
- 8:: Coil
- 8U, 8V, 8W:: Coil
- 11:: Shaft
- 12:: Rotor core
- 13:: Magnet
- 21:: Motor control device
- 22:: Control unit
- 23:: Rotor position estimation processing unit
- 24:: Speed estimation processing unit
- 25:: Speed instruction unit
- 26:: Drive voltage setting unit
- 27:: Timer
- 28:: Inverter circuit
- 29:: Position sensor
- Tθ:: Division angle rotation time
- β:: Speed control period

## Claims

1. A method for controlling a brushless motor (1) comprising
a stator (2) that includes a plurality of salient poles (6) protruding toward a radial-direction inner side, and a coil (8) being wound around each of the salient poles (6),
a rotor (3) that is disposed inside the stator (2) and where a plurality of magnets (13) are disposed along a radial direction, and
a plurality of Hall elements (29) that detects a change in magnetic flux of the magnets (13) and detect a rotation position of the rotor (2), wherein
based on a detection result of a sensor signal that is output from the Hall elements (29) as the magnetic flux changes, currents of three phases are supplied to the coil (8) to rotate the rotor (3), the method comprising:
a sine-wave voltage drive process that supplies a pseudo sine-wave voltage to the coil (8) to rotate the rotor (3),
a speed control process based on a target rotation speed, and
an advance angle process in which an angle of the applying voltage to the coil (8) is advanced by a predetermined angle relative to a rotation position of the rotor (3),
wherein the sine-wave voltage drive process comprises the step of:
acquiring an edge switching time of the sensor signal when outputs from each of the Hall elements (29) are switched as an elapsed time of a period during which the rotor (3) is rotated by a predetermined electric angle,
the method **characterized by** the sine-wave voltage drive process further comprising the steps of:
dividing the acquired elapsed time by a predetermined number, and calculating a division angle rotation time (Tθ) that is required for the rotor (3) to rotate by an angle that is calculated by dividing the predetermined electric angle by the predetermined number;
estimating a rotation position of the rotor (3) corresponding to each of the division angle rotation time (Tθ) of the next elapsed time of the current acquired elapsed time;
setting an applying voltage being supplied to the coil (8) for each of the division angle rotation time (Tθ) based on the estimated rotation position, regarding a drive voltage switching timing as when each of the division angle rotation time (Tθ) has elapsed, and supplying the applying voltage to the coil (8) every time the drive voltage switching timing comes;
the applying voltage is switched at each of the drive voltage switching timings until the next elapsed time elapses;
the speed control process comprising the steps of:
calculating an actual rotation speed of the rotor (3) based on the elapsed time,
comparing the actual rotation speed and a target rotation speed that is preset according to a rotation position of the rotor (3), and
correcting the applying voltage before the sine-wave voltage drive process becomes the control process using the estimated rotation position based on the next elapsed time in such a way that the rotor (3) rotates at the target rotation speed when the edge of the sensor signal is switched; wherein
the advance angle process advances the applying voltage so that a phase of phase current of the coil (8) is ahead of an induced voltage caused by rotation of the rotor (3), and
curbing the rotation speed which is increased by the advance angles by the speed control process.

2. The brushless motor control method according to claim 1, **characterized in that**:
the speed control process is performed at intervals that are less than or equal to twice the elapsed time.

3. The brushless motor control method according to claim 1 or 2, **characterized in that**:
when an edge switching angle (electric angle) of the sensor signal is sensor edge angle, the speed control process is performed at intervals that are equal to or less than: (1/motor rotation speed[rps])÷(360 degree×number of pole pairs/sensor edge angle×2).

4. A brushless motor control device (21) that conducts drive control of a brushless motor (1) comprising
a stator (2) that includes a plurality of salient poles (6) protruding toward a radial-direction inner side, and a coil (8) being wound around each of the salient poles (6),
a rotor (3) that is disposed inside the stator (2) and where a plurality of magnets (13) are disposed along a radial direction, and
a plurality of Hall elements (29) that detects a change in magnetic flux of the magnets (13) and detects a rotation position of the rotor (3), wherein
based on a detection result of a sensor signal that is output from the Hall elements (29) as the magnetic flux changes, currents of three phases are supplied to the coil (8) to rotate the rotor (3), the brushless motor control device (21) comprising:
a timer (27) that acquires an edge switching time of the sensor signal when outputs from each of the Hall elements (29) are switched as an elapsed time of a period during which the rotor (3) is rotated by a predetermined electric angle, and
the brushless motor control device (21) is **characterized in that** it further comprises:
a rotor position estimation processing unit (23) that divides the acquired elapsed time by a predetermined number, calculates a division angle rotation time (Tθ) that is required for the rotor (3) to rotate by an angle that is calculated by dividing the predetermined electric angle by the predetermined number, and estimates a rotation position of the rotor (3) corresponding to each of the division angle rotation time (Tθ) of the next elapsed time of the current acquired elapsed time;
a speed estimation processing unit (24) that calculates an actual rotation speed of the rotor (3) based on the elapsed time;
a speed instruction unit (25) that compares the actual rotation speed and a target rotation speed that is preset according to a rotation position of the rotor (3) and calculates an applying voltage value of the coil (8) that can make the rotor (3) rotate at the target rotation speed; and
a drive voltage setting unit (26) that performs a sine-wave voltage drive process that supplies a pseudo sine-wave voltage to the coil (8) to rotate the rotor (3), a speed control process based on a target rotation speed, and an advance angle process in which an angle of the applying voltage to the coil (8) is advanced by a predetermined angle relative to a rotation position of the rotor (3), wherein
the drive voltage setting unit,
as the sine-wave voltage drive process, sets, based on an estimated rotation position of the rotor (3), an applying voltage being supplied to the coil (8) for each of the division angle rotation time (Tθ), regards a drive voltage switching timing as when each of the division angle rotation time (Tθ) passes, calculates an applying voltage for each of the drive voltage switching timings, and switches the applying voltage at each of the drive voltage switching timings until the next elapsed time elapses;
as the speed control process, corrects the applying voltage calculated by the speed instruction unit (25) before the sine-wave voltage drive process becomes the control process using the estimated rotation position based on the next elapsed time in such a way that the rotor rotates at the target rotation speed when the edge of the sensor signal is switched;
as the advance angle process, advances an angle of the applying voltage by a predetermined angle relative to a rotation position of the rotor (3) so that a phase of phase current of the coil (8) is ahead of an induced voltage caused by rotation of the rotor (3), and
curbs the rotation speed which is increased by the advance angles by the speed control process.

5. The brushless motor control device (21) according to claim 4, **characterized in that**:
the speed control process is performed at intervals that are less than or equal to twice the elapsed time.

6. The brushless motor control device (21) according to claim 4 or 5, **characterized in that**:
when an edge switching angle (electric angle) of the sensor signal is sensor edge angle, the speed control process is performed at intervals that are equal to or less than: (1/motor rotation speed[rps])÷(360 degree×number of pole pairs/sensor edge angle×2).

## Patentansprüche

1. Verfahren zur Steuerung eines bürstenlosen Motors (1), umfassend
einen Stator (2), der eine Vielzahl von Schenkelpolen (6) einschließt, die zu einer Innenseite in radialer Richtung vorstehen, und eine Spule (8), die um jeden der Schenkelpole (6) gewickelt ist,
einen Rotor (3), der innerhalb des Stators (2) angeordnet ist und in dem eine Vielzahl von Magneten (13) entlang einer radialen Richtung angeordnet sind, und
eine Vielzahl von Hall-Elementen (29), die eine Änderung des magnetischen Flusses der Magnete (13) erkennen und eine Drehposition des Rotors (2) erkennen, wobei
basierend auf einem Erkennungsergebnis eines Sensorsignals, das von den Hall-Elementen (29) ausgegeben wird, wenn sich der magnetische Fluss ändert, Ströme von drei Phasen an die Spule (8) geliefert werden, um den Rotor (3) zu drehen, wobei das Verfahren Folgendes umfasst:
einen Sinusspannungsantriebsvorgang, der eine Pseudosinusspannung an die Spule (8) liefert, um den Rotor (3) zu drehen,
einen Geschwindigkeitssteuerungsvorgang, der auf einer Soll-Drehzahl basiert, und
einen Vorschubwinkelvorgang, bei dem ein Winkel der an die Spule (8) angelegten Spannung um einen vorbestimmten Winkel relativ zu einer Drehposition des Rotors (3) vorgeschoben wird,
wobei
der Sinusspannungsantriebsvorgang den folgenden Schritt umfasst:
Erfassen einer Flankenschaltzeit des Sensorsignals, wenn Ausgaben von jedem der Hall-Elemente (29) als verstrichene Zeit einer Zeitspanne geschaltet werden, während der der Rotor (3) um einen vorbestimmten elektrischen Winkel gedreht wird,
das Verfahren **dadurch gekennzeichnet ist, dass** der Sinusspannungsantriebsvorgang weiter die folgenden Schritte umfasst:
Teilen der erfassten verstrichenen Zeit durch eine vorbestimmte Zahl und Berechnen einer Teilungswinkeldrehzeit (Tθ), die erforderlich ist, damit sich der Rotor (3) um einen Winkel dreht, der durch Teilen des vorbestimmten elektrischen Winkels durch die vorbestimmte Zahl berechnet wird;
Schätzen einer Drehposition des Rotors (3), die jeder Teilungswinkeldrehzeit (Tθ) der nächsten verstrichenen Zeit der aktuell erfassten verstrichenen Zeit entspricht;
Einstellen einer Anlegespannung, die an die Spule (8) für jede der Teilungswinkeldrehzeit (Tθ) geliefert wird, auf der Grundlage der geschätzten Drehposition, Betrachten eines Antriebsspannungsschaltzeitpunkts als den Zeitpunkt, an dem jede der Teilungswinkeldrehzeit (Tθ) verstrichen ist, und Liefern der Anlegespannung an die Spule (8) jedes Mal, wenn der Antriebsspannungsschaltzeitpunkt kommt;
die Anlegespannung bei jedem der Antriebsspannungsschaltzeitpunkte geschaltet wird, bis die nächste verstrichene Zeit verstreicht;
der Geschwindigkeitssteuerungsvorgang die folgenden Schritte umfasst:
Berechnen einer Ist-Drehzahl des Rotors (3) auf der Grundlage der verstrichenen Zeit,
Vergleichen der Ist-Drehzahl mit einer Soll-Drehzahl, die entsprechend einer Drehposition des Rotors (3) voreingestellt ist, und
Korrigieren der Anlegespannung, bevor der Sinusspannungsantriebsvorgang zum Steuerungsvorgang wird, unter Verwendung der geschätzten Drehposition auf der Grundlage der nächsten verstrichenen Zeit, sodass sich der Rotor (3) mit der Soll-Drehzahl dreht, wenn die Flanke des Sensorsignals geschaltet wird; wobei
der Vorschubwinkelvorgang die Anlegespannung vorschiebt, sodass eine Phase des Phasenstroms der Spule (8) einer durch die Drehung des Rotors (3) verursachten induzierten Spannung voraus ist, und
Drosseln der Drehzahl, die durch die Vorschubwinkel erhöht wird, durch den Geschwindigkeitssteuerungsvorgang.

2. Verfahren zur Steuerung eines bürstenlosen Motors nach Anspruch 1, **dadurch gekennzeichnet, dass**:
der Geschwindigkeitssteuerungsvorgang in Intervallen durchgeführt wird, die kleiner oder gleich dem Doppelten der verstrichenen Zeit sind.

3. Verfahren zur Steuerung eines bürstenlosen Motors nach Anspruch 1 oder 2, **dadurch gekennzeichnet, dass**:
wenn ein Flankenschaltwinkel (elektrischer Winkel) des Sensorsignals ein Sensorflankenwinkel ist, der Geschwindigkeitssteuerungsvorgang in Intervallen durchgeführt wird, die gleich oder kleiner sind als: (1/Motordrehzahl [U/min])÷(360 Grad×Anzahk der Polpaare/Sensorflankenwinkel×2).

4. Bürstenlose Motorsteuervorrichtung (21), die eine Antriebssteuerung für einen bürstenlosen Motor (1) durchführt, umfassend
einen Stator (2), der eine Vielzahl von Schenkelpolen (6) einschließt, die zu einer Innenseite in radialer Richtung vorstehen, und eine Spule (8), die um jeden der Schenkelpole (6) gewickelt ist,
einen Rotor (3), der innerhalb des Stators (2) angeordnet ist und in dem eine Vielzahl von Magneten (13) entlang einer radialen Richtung angeordnet sind, und
eine Vielzahl von Hall-Elementen (29), die eine Änderung des magnetischen Flusses der Magnete (13) erkennen und eine Drehposition des Rotors (3) erkennen, wobei
basierend auf einem Erkennungsergebnis eines Sensorsignals, das von den Hall-Elementen (29) ausgegeben wird, wenn sich der magnetische Fluss ändert, Ströme von drei Phasen an die Spule (8) geliefert werden, um den Rotor (3) zu drehen, wobei die bürstenlose Motorsteuervorrichtung (21) Folgendes umfasst:
einen Timer (27), der eine Flankenschaltzeit des Sensorsignals erfasst, wenn Ausgaben von jedem der Hall-Elemente (29) als verstrichene Zeit einer Zeitspanne geschaltet werden, während der der Rotor (3) um einen vorbestimmten elektrischen Winkel gedreht wird, und
die bürstenlose Motorsteuervorrichtung (21) **dadurch gekennzeichnet ist, dass** sie weiter Folgendes umfasst:
eine Rotorpositionsschätzungsverarbeitungseinheit (23), die die erfasste verstrichene Zeit durch eine vorbestimmte Zahl teilt, eine Teilungswinkeldrehzeit (Tθ) berechnet, die erforderlich ist, damit sich der Rotor (3) um einen Winkel dreht, der durch Teilen des vorbestimmten elektrischen Winkels durch die vorbestimmte Zahl berechnet wird, und eine Drehposition des Rotors (3) schätzt,
entsprechend jeder der Teilungswinkeldrehzeit (Tθ) der nächsten verstrichenen Zeit der aktuell erfassten verstrichenen Zeit;
eine Geschwindigkeitsschätzungsverarbeitungseinheit (24), die eine Ist-Drehzahl des Rotors (3) auf der Grundlage der verstrichenen Zeit berechnet;
eine Geschwindigkeitsanweisungseinheit (25), die die Ist-Drehzahl und eine Soll-Drehzahl, die entsprechend einer Drehposition des Rotors (3) voreingestellt ist, vergleicht und einen Anlegespannungswert der Spule (8) berechnet, der den Rotor (3) dazu veranlassen kann, sich mit der Soll-Drehzahl zu drehen; und
eine Antriebsspannungseinstelleinheit (26), die einen Sinusspannungsantriebsvorgang, der eine Pseudosinusspannung an die Spule (8) liefert, um den Rotor (3) zu drehen, einen Geschwindigkeitssteuerungsvorgang auf der Grundlage einer Soll-Drehzahl und einen Vorschubwinkelvorgang durchführt, bei dem ein Winkel der Anlegespannung an die Spule (8) um einen vorbestimmten Winkel relativ zu einer Drehposition des Rotors (3) vorgeschoben wird, wobei
die Antriebsspannungseinstelleinheit
als Sinusspannungsantriebsvorgang auf der Grundlage einer geschätzten Drehposition des Rotors (3) eine Anlegespannung einstellt,
die an die Spule (8) für jede Teilungswinkeldrehzeit (Tθ) geliefert wird, einen Antriebsspannungsschaltzeitpunkt als den Zeitpunkt betrachtet, an dem jede Teilungswinkeldrehzeit (Tθ) verstreicht, eine Anlegespannung für jeden der Antriebsspannungsschaltzeitpunkte berechnet und die Anlegespannung zu jedem der Antriebsspannungsschaltzeitpunkte schaltet, bis die nächste verstrichene Zeit verstreicht;
als Drehzahlsteuerungsvorgang die Anlegespannung, die von der Drehzahlanweisungseinheit (25) berechnet wird, bevor der Sinusspannungsantriebsvorgang zum Steuerungsvorgang wird, unter Verwendung der geschätzten Drehposition auf der Grundlage der nächsten verstrichenen Zeit so korrigiert, dass sich der Rotor mit der Soll-Drehzahl dreht, wenn die Flanke des Sensorsignals geschaltet wird;
als Vorschubwinkelvorgang einen Winkel der Anlegespannung um einen vorbestimmten Winkel relativ zu einer Drehposition des Rotors (3) vorschiebt, sodass eine Phase des Phasenstroms der Spule (8) einer durch die Drehung des Rotors (3) verursachten induzierten Spannung voraus ist, und
die Drehzahl, die durch die Vorschubwinkel erhöht wird, durch den Drehzahlsteuerungsvorgang gedrosselt wird.

5. Bürstenlose Motorsteuervorrichtung (21) nach Anspruch 4, **dadurch gekennzeichnet, dass**:
der Geschwindigkeitssteuerungsvorgang in Intervallen durchgeführt wird, die kleiner oder gleich dem Doppelten der verstrichenen Zeit sind.

6. Bürstenlose Motorsteuervorrichtung (21) nach Anspruch 4 oder 5, **dadurch gekennzeichnet, dass**:
wenn ein Flankenschaltwinkel (elektrischer Winkel) des Sensorsignals ein Sensorflankenwinkel ist, der Geschwindigkeitssteuerungsvorgang in Intervallen durchgeführt wird, die gleich oder kleiner sind als: (1/Motordrehzahl [U/min])÷(360 Grad×Anzahk der Polpaare/Sensorflankenwinkel×2).

## Revendications

1. Procédé de commande d'un moteur (1) sans balai comprenant
un stator (2) qui inclut une pluralité de pôles saillants (6) faisant saillie vers un côté interne dans une direction radiale, et une bobine (8) étant enroulée autour de chacun des pôles saillants (6),
un rotor (3) qui est disposé à l'intérieur du stator (2) et où une pluralité d'aimants (13) sont disposés le long d'une direction radiale, et
une pluralité d'éléments à effet Hall (29) qui détectent un changement de flux magnétique des aimants (13) et détectent une position de rotation du rotor (2), dans lequel
sur la base d'un résultat de détection d'un signal de capteur qui est délivré en sortie depuis les éléments à effet Hall (29) quand le flux magnétique change, des courants de trois phases sont apportés à la bobine (8) pour faire tourner le rotor (3), le procédé comprenant :
un processus de pilotage en tension d'onde sinusoïdale qui apporte une tension d'onde pseudo-sinusoïdale à la bobine (8) pour faire tourner le rotor (3),
un processus de commande de vitesse sur la base d'une vitesse de rotation cible, et
un processus d'angle d'avancée dans lequel un angle de la tension d'application à la bobine (8) est avancé d'un angle prédéterminé par rapport à une position de rotation du rotor (3),
dans lequel
le processus de pilotage en tension d'onde sinusoïdale comprend l'étape de :
acquisition d'un temps de commutation de front du signal de capteur lorsque des sorties provenant de chacun des éléments à effet Hall (29) sont commutées en tant que temps écoulé d'une période durant laquelle le rotor (3) est mis en rotation d'un angle électrique prédéterminé,
le procédé étant **caractérisé en ce que** le processus de pilotage en tension d'onde sinusoïdale comprend en outre les étapes de :
division du temps écoulé acquis en un nombre prédéterminé, et calcul d'un temps de rotation d'angle de division (Tθ) qui est nécessaire pour que le rotor (3) tourne d'un angle qui est calculé en divisant l'angle électrique prédéterminé par le nombre prédéterminé ;
estimation d'une position de rotation du rotor (3) correspondant à chacun du temps de rotation d'angle de division (Tθ) du temps écoulé suivant du temps écoulé acquis courant ;
réglage d'une tension d'application apportée à la bobine (8) pour chacun du temps de rotation d'angle de division (Tθ) sur la base de la position de rotation estimée, en considérant un moment de commutation de tension de pilotage comme lorsque chacun du temps de rotation d'angle de division (Tθ) s'est écoulé, et apport de la tension d'application à la bobine (8) à chaque fois que le moment de commutation de tension de pilotage arrive ;
la tension d'application est commutée à chacun des moments de commutation de tension de pilotage jusqu'à ce que le temps écoulé suivant se soit écoulé ;
le processus de commande de vitesse comprenant les étapes de :
calcul d'une vitesse de rotation courante du rotor (3) sur la base du temps écoulé,
comparaison de la vitesse de rotation courante et d'une vitesse de rotation cible qui est prédéfinie en fonction d'une position de rotation du rotor (3), et
correction de la tension d'application avant que le processus de pilotage en tension d'onde sinusoïdale ne devienne le processus de commande utilisant la position de rotation estimée sur la base du temps écoulé suivant d'une manière telle que le rotor (3) tourne à la vitesse de rotation cible lorsque le front du signal de capteur est commuté ; dans lequel
le processus d'angle d'avancée fait avancer la tension d'application de telle sorte qu'une phase de courant de phase de la bobine (8) est devant une tension induite causée par la rotation du rotor (3), et
courbure de la vitesse de rotation qui est augmentée des angles d'avancée par le processus de commande de vitesse.

2. Procédé de commande de moteur sans balai selon la revendication 1, **caractérisé en ce que** :
le processus de commande de vitesse est mis en oeuvre à des intervalles qui sont inférieurs ou égaux à deux fois le temps écoulé.

3. Procédé de commande de moteur sans balai selon la revendication 1 ou la revendication 2, **caractérisé en ce que** :
lorsqu'un angle de commutation de front (angle électrique) du signal de capteur est un angle de front de capteur, le processus de commande de vitesse est mis en oeuvre à des intervalles qui sont inférieurs ou égaux à : (1/vitesse de rotation de moteur[rps]÷(360 degrés×nombre de paires de pôles/angle de front de capteur×2).

4. Dispositif de commande (21) de moteur sans balai qui conduit une commande de pilotage d'un moteur (1) sans balai comprenant
un stator (2) qui inclut une pluralité de pôles saillants (6) faisant saillie vers un côté interne dans une direction radiale, et une bobine (8) étant enroulée autour de chacun des pôles saillants (6),
un rotor (3) qui est disposé à l'intérieur du stator (2) et où une pluralité d'aimants (13) sont disposés le long d'une direction radiale, et
une pluralité d'éléments à effet Hall (29) qui détectent un changement de flux magnétique des aimants (13) et détectent une position de rotation du rotor (3), dans lequel
sur la base d'un résultat de détection d'un signal de capteur qui est délivré en sortie depuis les éléments à effet Hall (29) quand le flux magnétique change, des courants de trois phases sont apportés à la bobine (8) pour faire tourner le rotor (3), le dispositif de commande (21) de moteur sans balai comprenant :
un temporisateur (27) qui acquiert un temps de commutation de front du signal de capteur lorsque des sorties provenant de chacun des éléments à effet Hall (29) sont commutées en tant que temps écoulé d'une période durant laquelle le rotor (3) est mis en rotation d'un angle électrique prédéterminé, et
le dispositif de commande (21) de moteur sans balai est **caractérisé en ce qu'**il comprend en outre :
une unité (23) de traitement d'estimation de position de rotor qui divise le temps écoulé acquis en un nombre prédéterminé, calcule un temps de rotation d'angle de division (Tθ) qui est nécessaire pour que le rotor (3) tourne d'un angle qui est calculé en divisant l'angle électrique prédéterminé par le nombre prédéterminé, et estime une position de rotation du rotor (3) correspondant à chacun du temps de rotation d'angle de division (Tθ) du temps écoulé suivant du temps écoulé acquis courant ;
une unité (24) de traitement d'estimation de vitesse qui calcule une vitesse de rotation courante du rotor (3) sur la base du temps écoulé ;
une unité (25) d'instruction de vitesse qui compare la vitesse de rotation courante et une vitesse de rotation cible qui est prédéfinie en fonction d'une position de rotation du rotor (3) et calcule une valeur de tension d'application de la bobine (8) qui peut amener le rotor (3) à tourner à la vitesse de rotation cible ; et
une unité (26) de réglage de tension de pilotage qui met en oeuvre un processus de pilotage en tension d'onde sinusoïdale qui apporte une tension d'onde pseudo-sinusoïdale à la bobine (8) pour faire tourner le rotor (3), un processus de commande de vitesse sur la base d'une vitesse de rotation cible et un processus d'angle d'avancée dans lequel un angle de la tension d'application à la bobine (8) est avancé d'un angle prédéterminé par rapport à une position de rotation du rotor (3), dans lequel
l'unité de réglage de tension de pilotage,
en tant que processus de pilotage en tension d'onde sinusoïdale, règle, sur la base d'une position de rotation estimée du rotor (3), une tension d'application apportée à la bobine (8) pour chacun du temps de rotation d'angle de division (Tθ), considère un moment de commutation de tension de pilotage comme lorsque chacun du temps de rotation d'angle de division (Tθ) passe, calcule une tension d'application pour chacun des moments de commutation de tension de pilotage, et commute la tension d'application à chacun des moments de commutation de tension de pilotage jusqu'à ce que le temps écoulé suivant se soit écoulé ;
en tant que processus de commande de vitesse, corrige la tension d'application calculée par l'unité (25) d'instruction de vitesse avant que le processus de pilotage en tension d'onde sinusoïdale ne devienne le processus de commande utilisant la position de rotation estimée sur la base du temps écoulé suivant d'une manière telle que le rotor tourne à la vitesse de rotation cible lorsque le front du signal de capteur est commuté ;
en tant que processus d'angle d'avancée, fait avancer un angle de la tension d'application d'un angle prédéterminé par rapport à une position de rotation du rotor (3) de telle sorte qu'une phase de courant de phase de la bobine (8) est devant une tension induite causée par la rotation du rotor (3), et
courbe la vitesse de rotation qui est augmentée des angles d'avancée par le processus de commande de vitesse.

5. Dispositif de commande (21) de moteur sans balai selon la revendication 4, **caractérisé en ce que** :
le processus de commande de vitesse est mis en oeuvre à des intervalles qui sont inférieurs ou égaux à deux fois le temps écoulé.

6. Dispositif de commande (21) de moteur sans balai selon la revendication 4 ou la revendication 5, **caractérisé en ce que** :
lorsqu'un angle de commutation de front (angle électrique) du signal de capteur est un angle de front de capteur, le processus de commande de vitesse est mis en oeuvre à des intervalles qui sont inférieurs ou égaux à : (1/vitesse de rotation de moteur[rps]÷(360 degrés×nombre de paires de pôles/angle de front de capteur×2).
